# EUROPÄISCHE PATENTSCHRIFT

(11) **EP 1 473 510 B1**
(45) Veröffentlichungstag und Bekanntmachung des Hinweises auf die Patenterteilung: **25.11.2009**
(21) Anmeldenummer: 03405307.4
(22) Anmeldetag: 01.05.2003
(51) Int. Cl.: F16M 11/14, F16C 11/10

(54) **Stativkopf**
Tripod head
Tête de trépied

(43) Veröffentlichungstag der Anmeldung: 03.11.2004
(73) Patentinhaber: Vogt, Philippe, 25048 Besancon (FR)
(72) Erfinder: Vogt, Philippe, 25048 Besancon (FR)
(74) Vertreter: Götze, Stephen

(56) Entgegenhaltungen:
- EP-A- 0 349 948
- EP-A- 0 984 219
- DE-A- 2 203 196
- DE-C- 612 723
- FR-A- 1 018 869
- FR-A- 2 799 807
- US-A- 3 211 405

## Beschreibung

Die Erfindung betrifft einen Stativkopf gemäß dem Oberbegriff des Anspruchs 1.

Die DE 2203 196 offenbart einen Stativkopf, der ein zylindrisches Gehäuse mit einem Unterteil zur Befestigung an einem Stativ und mit einem drehbar angeordneten Oberteil, eine Gelenkkugel, die in einem Gehäuse beliebig drehbar und schwenkbar gelagert ist und eine Feststelleinrichtung mit einem Klemmteil für die Gelenkkugel, einem Feststellorgan und einer Stellschraube aufweist, welche Einrichtung zur Erzielung einer Klemmwirkung die Gelenkkugel gegen das Oberteil drückt.

Die Nachteile des Stativkopfes sind darin zu sehen, dass insbesondere bei Großformatkameras die erforderliche Klemmwirkung bei geneigtem Bild- oder Objektivträger nicht auf die Gelenkkugel aufbringbar ist und ein optisches Gerät nicht schwingungsfrei gehalten wird und dass die Funktionsmerkmale Drehen und Feststellen der Gelenkkugel von der Feststelleinrichtung als Ganzes ausgeführt werden.

Die FR 2 799 807 offenbart einen Stativkopf, der ein einseitig offenes Gehäuse mit einem Unterteil zur Befestigung an einem Stativ, eine sphärische Gelenkkugel, die in einem Gehäuse verschwenkbar gelagert ist, ein Rückhaltemittel für die Gelenkkugel, das im offenen Ende des Gehäuses angeordnet ist, ein Klemmteil mit einer konkaven Wand, der in dem Gehäuse verschiebbar angeordnet ist und eine Einrichtung zum Feststellen der Gelenkkugel aufweist, welche Einrichtung zur Erzielung einer Klemmwirkung die Gelenkkugel gegen das Rückhaltemittel drückt. Die Einrichtung zum Feststellen der Gelenkkugel umfasst einen axial verschiebbaren oberen Teil und einen am Gehäuse abgestützten unteren Teil, die eine geschlossenen ringförmige Aufnahme bilden, eine Mehrzahl von Kugeln, die mit einem geringen Spiel in der durch konische Umfangsflächen begrenzten Aufnahme angeordnet sind, eine radial angeordnete Nadel, welche mit zwei benachbarten Kugeln im Eingriff steht, und ein Betätigungsmittel, mit welchem das Eindringen der Nadel zwischen die Kugeln einstellbar ist.

Die EP 0 349 948 A1 offenbart einen Stativkopf zur Aufnahme eines optischen Gerätes mit einem zylinderförmigen Gehäuse, das an einem Ende eine Anschlusseinrichtung für ein Stativ aufweist, mit einem eben symmetrischen Körper, der im Gehäuse beweglich angeordnet ist und mit einer Feststelleinrichtung, um den Körper festzuklemmen. Die Feststelleinrichtung weist mindestens zwei mit jeweils einer Schrägfläche versehene Organe auf 1 die auf einer ortsfesten Unterlage abgestützt, mit den Schrägflächen aufeinanderliegend und quer zueinander verschiebbar angeordnet sind, um das eine Organ zur Erzielung der Klemmwirkung gegen den
Körper zu verschieben. Ferner weist sie eine Stelleinrichtung auf, die mit dem anderen Organ in Eingriff steht, um das andere Organ zum erstgenannten Organ quer zu verschieben. Bei dem Körper kann es sich um einen als Rotationskörper ausgebildeten insbesondere abgeplattetes Rotationsellipsoid handeln.

Die DE 612 723 C offenbart ein Stativ mit abnehmbarem Träger der mittels Kugelgelenks gelagerten Aufsatzplatte, wobei einer oder mehrere der in bekannter Weise das Umlegen des mit der Kugel verbundenen Trägers der Aufsatzplatte ermöglichten Aussparungen so groß ausgebildet sind, dass durch diese die Kugel mit dem Träger herausgenommen werden kann und das ferner eine Sicherung
vorgesehen ist, die das unbeabsichtigte Hinausgleiten der Kugel durch die vergrößerte Aussparung verhindert.

Der Erfindung liegt die Aufgabe zugrunde einen Stativkopf insbesondere in dieser Hinsicht zu verbessern.

Die Lösung dieser Aufgabe ergibt sich aus dem unabhängigen Anspruch. Weiterbildungen sind Gegenstand der abhängigen Ansprüche.

Der Erfindung liegt der Gedanke zugrunde, für die Funktionsmerkmale Drehen bzw. Feststellen der Gelenkkugel separate Mittel vorzusehen. Hierzu sind ein Lagerelement mit einer am Außenumfang der Gelenkkugel anliegenden Gleitfläche im Gehäuse verschiebbar und drehbar angeordnet und eine Einrichtung zum Feststellen der Gelenkkugel mit einem axial verschiebbaren Auflager für das Lagerelement und mit dem Auflager in Wirkverbindung stehende Mitteln vorgesehen, um das Lagerelement zur Erzielung einer Klemmwirkung zu verschieben.

Die mit der Erfindung erzielbaren Vorteile sind darin zu sehen, dass das optische

Gerät einfach einstellbar ist.

Es ist von Vorteil, wenn das Lagerelement eine Schale ist. Dadurch werden die Drehbewegung und die Schwenkbewegung der Gelenkkugel stabilisiert.

Bei einer Ausführung ist zwischen dem Lagerelement und dem Auflager ein Wälzlager angeordnet. Dies hat den Vorteil, dass die Laufeigenschaft des Lagerelementes bei der Drehung verbessert wird.

Bei einer bevorzugten Ausführung weist die Feststelleinrichtung ein Auflager mit zwei Ansätzen, die mit einer Schrägfläche versehen sind, zwei jeweils mit einer Schrägfläche versehene Feststellorgane, die auf einer ortsfesten Unterlage abgestützt, mit ihren Schrägflächen an den Schrägflächen der Ansätze anliegend und quer zueinander verschiebbar angeordnet sind und eine Stelleinrichtung und einer Gewindespindel auf, das mit den Feststellorganen in Eingriff steht, und ein Betätigungselement aufweist, um durch eine Drehbewegung die Feststellorgane zu den Ansätzen am Auflager quer zu verschieben und das Lagerelement zur Erzielung der Klemmwirkung gegen
die Gelenkkugel zu verschieben.

Die dadurch erzielbaren Vorteile sind darin zu sehen, dass eine zuverlässige Klemmwirkung erzielt wird und die am optischen Gerät auftretenden Schwingungen wirkungsvoll gedämpft werden.

Die Einrichtung zum Feststellen der Gelenkkugel kann ein Auflager für das Lagerelement, das als ringförmiger Körper mit ebenen Stirnflächen ausgebildet ist, mindestens ein Feststellorgan mit einer exzentrischen Kontur, das mit dem Auflager in Eingriff steht, und eine Stelleinrichtung mit einer Welle, das mit dem Feststellorgan verbunden ist und ein Betätigungselement enthalten, das mit der Welle verbunden ist, um das Lagerelement gegen die Gelenkkugel zu verschieben, Diese Einrichtung hat den Vorteil einfach aufgebaut und kostengünstig zu sein.

Bei einer Ausführung ist das Auflager mit einer Auskehlung versehen, die mit dem exzentrischen Feststellorgan in Eingriff ist. Dadurch wird eine axiale Drehbewegung des Auflagers verhindert.

Bei einer anderen Ausführung weist das Auflager einen L-förmigen Querschnitt auf und ist mit der Welle in Eingriff. Dadurch wird eine axiale Drehbewegung verhindert.

Die Gelenkkugel hat eine Kontur, derart, dass abhängig von der Schwenkbewegung die Klemmwirkung zu bzw. abnimmt. Dadurch wird in vorteilhafter Weise eine größere Dämpfung erzielt, so dass der Schwerpunkt des an der Gelenkkugel befestigten Gerätes bei der Schwenkung außerhalb des Umfangs der Gelenkkugel liegen kann.

Nachfolgend wird die Erfindung anhand der beiliegenden Figuren erläutert.

### Es zeigen:

Fig.1 einen Schnitt durch eine bevorzugte Ausführung 5 eines erfindungsgemäßen Stativkopfes,
Fig.2 eine in Richtung des Pfeiles II betrachtete Ansicht des Auflagers nach Fig. 1,
Fig.3 eine in Richtung des Pfeiles III betrachtete Ansicht der Feststelleinrichtung,
Fig.4 einen Schnitt durch eine andere Ausführung eines erfindungsgemäßen Stativkopfes,
Fig.5 eine andere Ausführung einer Feststelleinrichtung,
Fig.6 eine Schnitt entlang der Linie VI-VI in Fig.5,
Fig.7 eine weitere Ausführung einer Feststelleinrichtung,
Fig.8 einen Schnitt entlang der Linie VIII-VIII in Fig. 7,
Fig.9 eine Modifikation der Ausführung nach Fig.7 und
Fig. 10 eine Ansicht in Richtung des Pfeiles A in Fig. 9.

Der Stativkopf besteht im Wesentlichen aus einem zylindrischen Gehäuse 1, einer Gelenkkugel 2 mit einem Abschnitt 3 zum Verbinden mit einem optischen Gerät, die im Gehäuse 1 drehbar und schwenkbar angeordnet ist, einer Lagerschale 4 für die Gelenkkugel 2 und einer Einrichtung 5 zum Feststellen der Gelenkkugel 2.

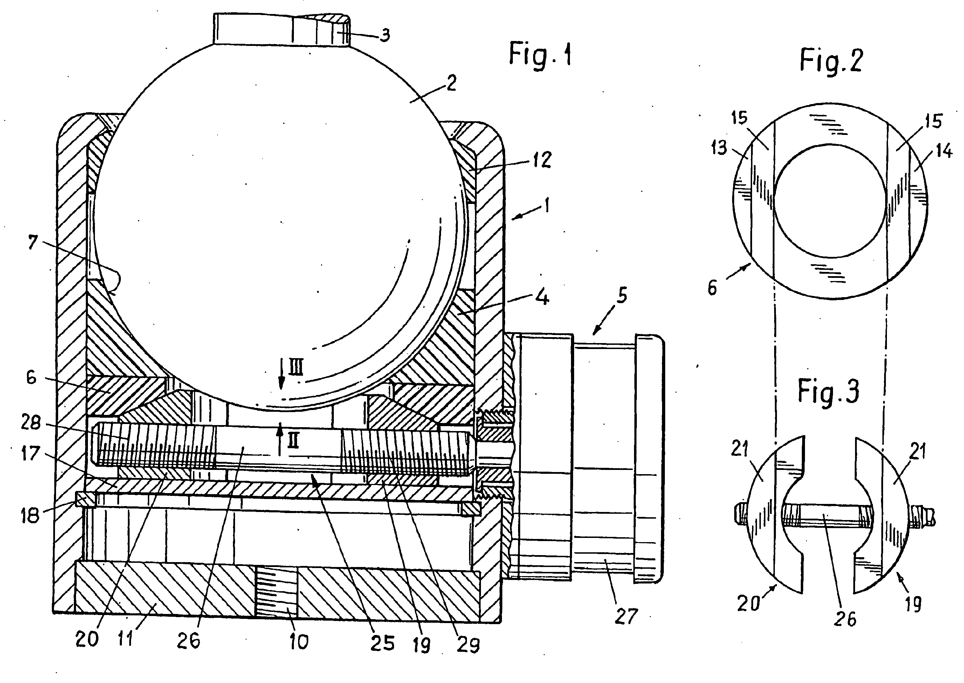

Es wird auf die Figuren 1 bis 3 Bezug genommen. Das Gehäuse ist an einem Ende mit einer Platte 11 abgeschlossen, die mit einer Gewindebohrung 10 zum Verbinden mit einem Stativ versehen ist. Am anderen Ende ist das Gehäuse 1 mit einem Lagerring 12 für die Gelenkkugel 2 versehen.

Die Gelenkkugel stellt ein abgeplattetes Rotationsellipsoid dar, d.h. hat etwa die Form einer Erdkugel, die im Bereich der Äquatorlinie einen grösseren Durchmesser hat.

Die Lagerschale 4 ist mit einer an den Umfang der Gelenkkugel 2 anliegenden Gleitfläche 7 versehen und ist axial verschiebbar und drehbar im Gehäuse 1 angeordnet. Die Lagerschale 4 ist auf der Einrichtung 5 zum Feststellen der Gelenkkugel abgestützt. Die Lagerschale 4 besteht aus Kunststoff.

Die Einrichtung 5 ist auf einer Platte 17 angeordnet, die mittels eines Seegerringes 18 im Gehäuse 1 gehalten ist. Die Einrichtung 5 umfasst ein Auflager 6, zwei Schiebeteile 19,20 und eine Stelleinrichtung 25.

Das Auflager 6 ist ein ringförmiger Körper, der an einer Stirnseite eine ebene Auflagefläche für die Lagerschale 4 und an der anderen Stirnseite zwei Ansätze 13,14 aufweist. Die Ansätze 13,14 sind einander gegenüberliegend angeordnet und weisen jeweils eine Schrägfläche 15 auf (Fig.2).

Die zwei Schiebeteile 19,20 liegen einerseits auf der Platte 17 auf und sind andererseits mit einer Schrägfläche 21 versehen. Die Schrägflächen 15 am Auflager 6 und an den Schiebeteilen 19,20 haben entgegengesetzte Neigungen mit gleichem Neigungswinkel. Das Auflager 6 und die Schiebeteile 19,20 sind mit ihren Schrägflächen 15,21 aufeinanderliegend angeordnet, sodass eine radiale Verschiebung der Schiebeteile 19,20 eine Verschiebung des Auflagers 6 in Richtung der Gelenkkugel bewirkt.

Diese radiale Verschiebung wird durch die Stelleinrichtung 25 bewirkt, die aus einer Gewindespindel 26 und einem Drehknopf 27 besteht. Hierzu ist in den Schiebeteilen 19,20 jeweils ein Gewindeloch vorgesehen und an der Gewindespindel 26 sind Gewindeabschnitte mit linksgängigen bzw. rechtsgängigen Gewinde 28,29 ausgebildet, auf denen die Schieberteile 1920 aufgeschraubt sind. Die Gewindespindel 26 ist einseitig aus dem Gehäuse 1 herausgeführt und an diesem Ende mit dem Drehknopf 27 versehen.

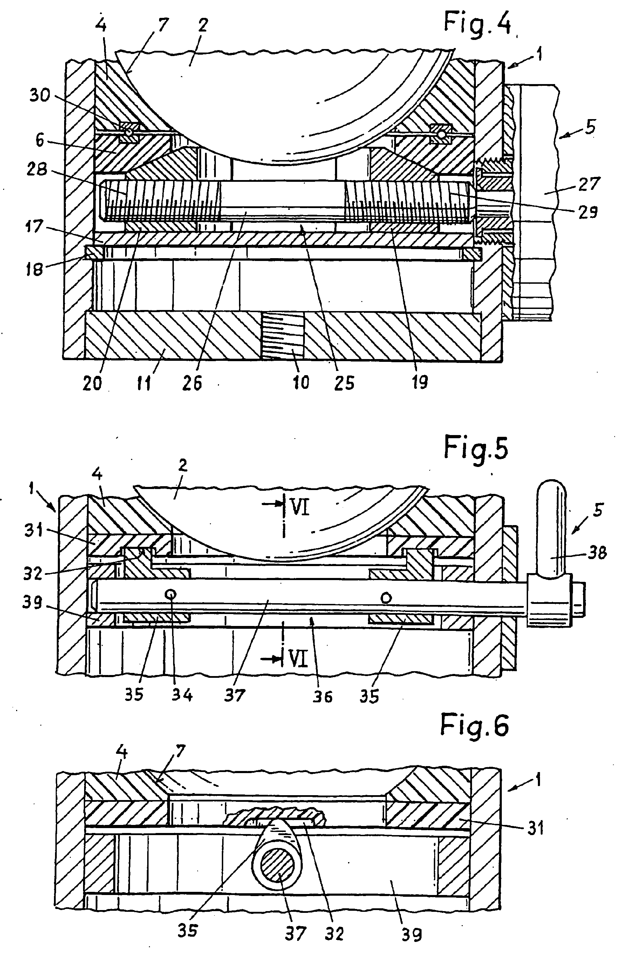

Bei der Ausführung nach Fig.4 ist zwischen der Lagerschale 4 und dem Auflager 6 ein Wälzlager 30 angeordnet.

Es wird auf die Figuren 5 und 6 Bezug genommen. Das Auflager ist ein ringförmiger Körper 31, der an einer Stirnseite eine ebene Auflagefläche für die Lagerschale 4 und an der anderen Stirnseite zwei Auskehlungen 32 aufweist, die diametral gegenüberliegend angeordnet sind.

Die Einrichtung 5 zum Feststellen der Gelenkkugel weist zwei Kurvenscheiben 35 mit einer identischen Kontur und eine Stelleinrichtung 36 mit einer Welle 37 und einem Hebel 38 auf. Die Kurvenscheiben 35 sind mittels Stiften 34 auf der Welle 37 montiert und sind mit den Auskehlungen 32 im Auflager 31 in Eingriff. Die Welle 37 ist in einem Lagerring 39 gelagert, der im Gehäuse 1 angeordnet ist.

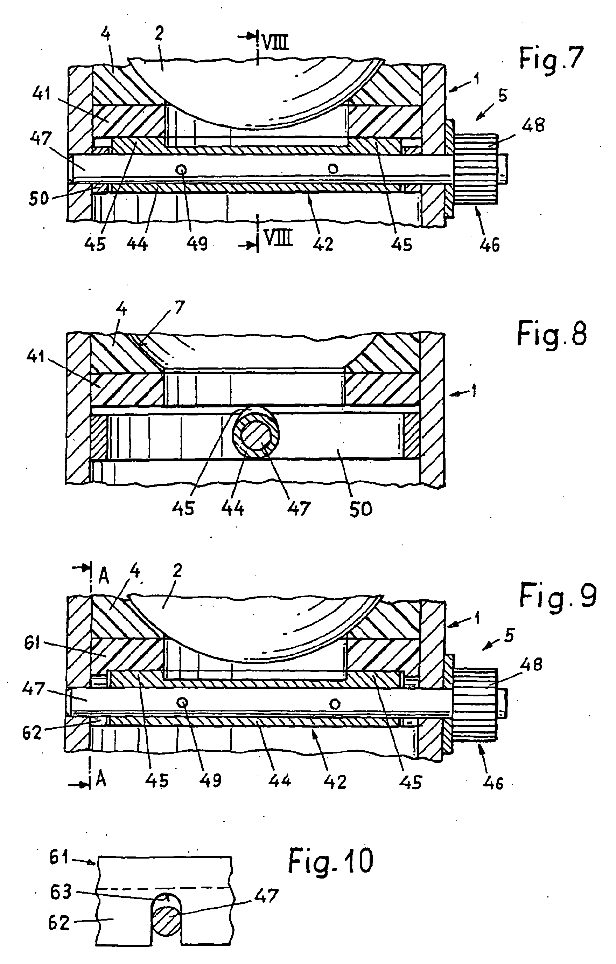

Es wird auf die Fig.7 und 8 Bezug genommen. Das Auflager 41 ist ein ringförmiger Körper mit zwei ebenen Stirnflächen.

Die Einrichtung 5 zum Feststellen der Gelenkkugel enthält ein Feststellorgan 42, das aus einer Hülse 44 mit zwei im Abstand zueinander ausgebildeten Nocken 45 besteht und eine Stelleinrichtung 46, die aus einer Welle 47 und einem Drehknopf 48 besteht. Die Hülse 44 ist mittels zwei Stifte 49 mit der Welle 47 verbunden. Zum Ausrichten des Feststellorgans 42 bezüglich des Auflagers 41 ist ein Ring 50 im Gehäuse 1 angeordnet.

Die Figuren 9 und 10 zeigen eine Ausführung, bei welcher das Auflager 61 einen L-förmigen Querschnitt hat und im Schenkel 62 zwei gegenüberliegend ausgebildete Schlitze 63 aufweist, welche die Welle 47 der Stelleinrichtung umgreifen und folglich eine Drehbewegung des Auflagers 61 verhindern.

Nachzutragen ist, dass das Feststellorgan aus einem zylindrischen Körper mit einer zur Achse des Körpers versetzten Durchbohrung bestehen kann.

Ferner kann das Auflager durch mindestens einen Stift gegen axiale Drehbewegung gesichert werden.

Bei der Anwendung des Stativkopfes wird von einer Grundeinstellung ausgegangen, in welcher eine die Gelenkkugel stabil haltende Haltekraft wirkt. In dieser Grundein15 stellung besteht keine Verbindung des Lagerelementes mit dem Auflager, sodass die Gelenkkugel mit dem Lagerelement auf dem Auflager gedreht und im Lagerelement geschwenkt werden kann. Zur Stabilisierung der Schwenkung wird die von der Gelenkform und der 5 Schalenform abhängige Haltekraft erhöht, wodurch eine die Drehbewegung des Lagerelementes beeinflussende Verbindung mit dem Auflager hergestellt wird. In dieser Stellung kann die Gelenkkugel ohne Positionsänderung des Lagerelementes geschwenkt werden. Zum Kamerawechsel oder bei Änderung an der Kamera wird die Gelenkkugel im Gehäuse festgeklemmt.

## Patentansprüche

1. Stativkopf enthaltend ein zylindrisches Gehäuse (1), das an einem Ende ein Anschlussmittel (11) für ein Stativ aufweist, eine als abgeplattetes Rotationsellipsoid ausgebildete Gelenkkugel (2), die drehbar und schwenkbar im Gehäuse (1) gelagert ist, einen Aufnahmeteil (4) für die Gelenkkugel (2) und eine Einrichtung (5) zum Feststellen der Gelenkkugel mit mindestens einem Feststellorgan und mit einer Stellschraube oder Welle, welche Einrichtung (5) zur Erzielung einer Klemmwirkung die Gelenkkugel (2) gegen das Gehäuse (1) drückt, wobei der Aufnahmeteil ein
Lagerelement mit einer am Umfang der Gelenkkugel anliegende Gleitfläche (7) ist, das im Gehäuse axial verschiebbar und drehbar angeordnet ist, **dadurch gekennzeichnet** 1 dass die Einrichtung (5) zum Feststellen der Gelenkkugel ein als ringformiges Körper ausgebildetes Auflager (6, 31,41,61) für das Lagerelement und mit dem Auflager (6) in Wirkverbindung stehende Mittel (19, 20, 25, 35, 36. 42, 44), die als Schiebeteile(19, 20) auf der Gewindespindel (26) der Stellschraube, Kurvenscheiben (35) auf der Welle (37) oder Nocken (45) auf der Welle (47) ausgebildet sind, aufweist, um das Lagerelement zur Erzielung der Klemmwirkung gegen die Gelenkkugel zu verschieben.

2. Stativkopf nach Anspruch 1, **dadurch gekennzeichnet, dass** das Lagerelement eine Schale ist.

3. Stativkopf nach Anspruch 1, **dadurch gekennzeichnet, dass** die Einrichtung zum Feststellen der Gelenkkugel ein Stellschraube aufweist und ein Wälzlager (30) zwischen dem Lagerelement und dem Auflager (6) vorgesehen ist.

4. Stativkopf nach Anspruch 1, **dadurch gekennzeichnet, dass** die Einrichtung (5) zum Feststellen der Gelenkkugel ein Auflager (6) mit zwei Ansätzen, die mit einer Schrägfläche versehen sind, zwei jeweils mit einer Schrägfläche versehene Festellorgane (19, 20), die auf einer ortsfesten Unterlage (17)abgestützt, mit ihren Schrägflächen an den Schrägflächen der Ansätze des Auflagers (6) anliegend und quer zueinander verschiebbar angeordnet sind, und eine Stelleinrichtung (25) mit einer Gewindespindel (26), das mit den Feststellorganen (19, 20) in Eingriff ist, und ein Betätigungselement (27) aufweist, um durch eine Drehbewegung die Feststellorgane (19, 20) zu den Ansätzen am Auflager (6) quer zu verschieben und das Lagerelement zur Erzielung der Klemmwirkung gegen die Gelenkkugel (1) zu verschieben.

5. Stativkopf nach Anspruch 1, **dadurch gekennzeichnet, dass** die Einrichtung (5) zum Feststellen der Gelenkkugel ein Auflager (31), das als ringförmiger Körper mit ebenen Stirnflächen ausgebildet ist, mindestens ein Feststellorgan (35) mit einer exzentrischen Kontur, das mit dem Auflager (6) im Eingriff steht, und eine Stelleinrichtung (36) mit einer Welle (37), das mit dem Feststellorgan (35) verbunden ist, und ein Betätigungselement (38) aufweist, das mit der Welle (37) verbunden ist, um durch eine Dreh- oder Schwenkbewegung das Lagerelement gegen die Gelenkkugel (1) zu verschieben.

6. Stativkopf nach Anspruch 5, **dadurch gekennzeichnet, dass** das Auflager (31) mindestens eine mit dem exzentrischen Feststellorgan (35) in Eingriff stehende Auskehlung (32) aufweist, um eine axiale Drehbewegung des Auflagers (31) zu verhindern.

7. Stativkopf nach Anspruch 5, **dadurch gekennzeichnet, dass** das Auflager (61) einen L-förmigen Querschnitt aufweist und dass das Auflager (61) mit der Welle (47) in Eingriff ist, um eine axiale Drehbewegung des Auflagers (61) zu verhindern.

8. Stativkopf nach Anspruch 4 oder 5, **dadurch gekennzeichnet, dass** das Betätigungselement ein Drehknopf (27, 48) oder ein Hebel (38) ist.

## Claims

1. Head for stand or tripod, comprising a cylindrical housing (1) having a connecting means (11) for a stand or tripod at one end, a ball-joint ball (2) in the form of a flatted ellipsoid of revolution which is mounted to be rotatable and pivotable in the housing (1), a receiving part (4) for the ball-joint ball (2), and an arrangement (5) for locking the ball-joint ball having at least one locking member and having a displacing screw or a shaft, which arrangement (5) presses the ball-joint ball (2) against the housing (1) to allow a clamping action to be obtained, the receiving part being a bearing member having a face (7) for sliding movement which bears against the circumference of the ball-joint ball, which bearing member is arranged to be axially displaceable and rotatable in the housing (1), **characterized in that** the arrangement (5) for locking the ball-joint ball has a support (6, 31, 41, 61) for the bearing member which is in the form of an annular body, and means (19, 20, 25, 35, 36, 42, 44) operatively connected to the support (6) which take the form of sliding parts (19, 20) on the threaded spindle (26) of the displacing screw, cam discs (35) on the shaft (37) or cam lugs (45) on the shaft (47), to allow the bearing member to be displaced towards the ball-joint ball to allow the clamping action to be obtained.

2. Head for stand or tripod according to claim 1, **characterized in that** the bearing member is a cup.

3. Head for stand or tripod according to claim 1, **characterized in that** the arrangement for locking the ball-joint ball has an displacing screw, and a rolling-element bearing (30) is provided between the bearing member and the support (6).

4. Head for stand or tripod according to claim 1, **characterized in that** the arrangement (5) for locking the ball-joint ball has a support (6) having two projections which are provided with inclined surfaces, has two locking members (19, 20) which are each provided with an inclined surface, which are supported on a fixed base member (17), and which are arranged to be displaceable transversely relative to one another with their inclined surfaces bearing against the inclined surfaces of the projections on the support (6), has a displacing arrangement (25) having a threaded spindle (26) which engages with the locking members (19, 20), and has an actuating member (27), in order, by means of a rotary movement, to enable the locking members (19, 20) to be displaced transversely relative to the projections on the support (6) and to enable the bearing member to be displaced towards the ball-joint ball (1) to enable the clamping action to be obtained.

5. Head for stand or tripod according to claim 1, **characterized in that** the arrangement (5) for locking the ball-joint ball has a support (31) which takes the form of an annular body having plane front and rear faces, has at least one locking member (35) having an eccentric outline which engages with the support (6), and has an displacing arrangement (36) which has a shaft (37) which is connected to the locking member (35), and has an actuating member (38) which is connected to the shaft (37), to enable the bearing member to be displaced towards the ball-joint ball (1) by means of a rotary or pivoting movement.

6. Head for stand or tripod according to claim 5, **characterized in that** the support (31) has at least one groove (32) which engages with the eccentric locking member (35), to prevent an axial rotary movement of the support (31).

7. Head for stand or tripod according to claim 5, **characterized in that** the support (61) is of an L-shaped cross-section and **in that** the support (61) engages with the shaft (47) to prevent an axial rotary movement of the support (61)

8. Head for stand or tripod according to claim 4 or 5, **characterized in that** the actuating member is a rotary knob (27, 48) or a lever (38).

## Revendications

1. Tête de trépied contenant un boîtier cylindrique (1) qui comporte à une extrémité un moyen (11) de raccordement à un trépied, une rotule d'articulation (2) qui est conformée en ellipsoïde de révolution aplati et qui est montée dans le boîtier (1) de façon à pouvoir tourner et pivoter, une pièce (4) de réception de la rotule d'articulation (2), et un dispositif (5) d'immobilisation de la rotule d'articulation qui comporte au moins un organe d'immobilisation et un arbre ou une vis de réglage, lequel dispositif (5) presse la rotule d'articulation (2) contre le boîtier (1) afin d'obtenir un effet de serrage, la pièce de réception étant un élément de palier qui présente une surface de glissement (7) portant sur la périphérie de la rotule d'articulation et qui est disposé axialement dans le boîtier de façon à pouvoir se déplacer en rotation et en translation, **caractérisée en ce que** le dispositif (5) d'immobilisation de la rotule d'articulation possède un coussinet (6, 31, 41, 61), qui est conformé en corps annulaire et destiné à l'élément de palier, et des moyens (19, 20, 25, 35, 36, 42, 44) qui sont en liaison active avec le coussinet (6) et qui sont conformés en pièces coulissantes (19, 20) placées sur la tige filetée (26) de la vis de réglage, en disque à came (35) placées sur l'arbre (37) ou en cames (45) placées sur l'arbre (47), pour déplacer en translation l'élément de palier contre la rotule d'articulation afin d'obtenir l'effet de serrage.

2. Tête de trépied selon la revendication 1, **caractérisée en ce que** l'élément de palier est une coquille de coussinet.

3. Tête de trépied selon la revendication 1, **caractérisée en ce que** le dispositif d'immobilisation de la rotule d'articulation comporte une vis de réglage et **en ce qu'**un palier à roulement (30) est prévu entre l'élément de palier et le coussinet (6).

4. Tête de trépied selon la revendication 1, **caractérisée en ce que** le dispositif (5) d'immobilisation de la rotule d'articulation comporte un coussinet (6) comprenant deux saillies qui sont dotées d'une surface oblique, deux organes d'immobilisation (19, 20) qui sont dotés chacun d'une surface oblique et qui sont disposés en appui sur un support immobile (17), leurs surfaces obliques portant sur les surfaces obliques des saillies du coussinet (6), et de façon à pouvoir se déplacer en translation transversalement l'un à l'autre, et un dispositif de réglage (25) doté d'une tige filetée (26) qui est en engagement avec les organes d'immobilisation (19, 20), et un élément d'actionnement (27), afin de déplacer en translation, par un mouvement de rotation, les organes de réglage (19, 20) transversalement aux saillies sur le coussinet (6) et pour déplacer en translation l'élément de palier contre la rotule d'articulation (1) afin d'obtenir l'effet de serrage.

5. Tête de trépied selon la revendication 1, **caractérisée en ce que** le dispositif (5) d'immobilisation de la rotule d'articulation comporte un coussinet (31) qui est conformé en corps annulaire doté de surfaces frontales planes, au moins un organe d'immobilisation (35) qui présente un contour excentrique et qui est en engagement avec le coussinet (6), et un dispositif de réglage (36) doté d'un arbre (37) qui est relié à l'organe d'immobilisation (35), et un élément d'actionnement (38) qui est relié à l'arbre (37) pour déplacer en translation l'élément de palier contre la rotule d'articulation (1) par un mouvement de rotation ou de pivotement.

6. Tête de trépied selon la revendication 5, **caractérisée en ce que** le coussinet (31) comporte au moins une cannelure (32) qui est en engagement avec l'organe d'immobilisation excentrique (35), pour empêcher le coussinet (31) d'effectuer un mouvement de rotation axial.

7. Tête de trépied selon la revendication 5, **caractérisée en ce que** le coussinet (61) a une section en L et **en ce que** le coussinet (61) est en engagement avec l'arbre (47), afin d'empêcher le coussinet (61) d'effectuer un mouvement de rotation axial.

8. Tête de trépied selon la revendication 4 ou 5, **caractérisée en ce que** l'élément d'actionnement est un bouton tournant (27, 48) ou un levier (38).
